# EUROPEAN PATENT SPECIFICATION

(11) **EP 2 559 723 B1**
(45) Date of publication and mention of the grant of the patent: **24.01.2018**
(21) Application number: 11177794.2
(22) Date of filing: 17.08.2011
(51) Int. Cl.: C08G 81/02, C08L 81/06, C08F 2/48, B01D 71/68, B01D 71/78, B01D 69/08, C08L 39/06, B01D 71/44

(54) **Method for preparing graft copolymers and a porous membrane**
Verfahren zur Herstellung von Pfropfcopolymeren und einer porösen Membran
Procédé de préparation de copolymères greffés et d'une membrane poreuse

(43) Date of publication of application: 20.02.2013
(73) Proprietor: Gambro Lundia AB, 220 10 Lund (SE)
(72) Inventor: Krause, Bernd, 72414 Rangendingen (DE); Goehl, Hermann, 72406 Bisingen (DE); Storr, Markus, 70794 Filderstadt (DE); Menda, Ralf, 72411 Bodelshausen (DE)
(74) Representative: Perchenek, Nils

(56) References cited:
- EP-A1- 0 823 281
- EP-A1- 2 365 022
- WO-A1-99/55449
- JP-A- 2003 171 525
- US-A1- 2003 209 487

## Description

### Technical Field

The present disclosure relates to a method for preparing graft copolymers of hydrophobic polymers and hydrophilic polymers, to graft copolymers prepared by said method, and their use in membranes for medical treatments like haemodialysis, haemodiafiltration, haemofiltration and plasma separation, in membranes for water purification, and membranes for bioprocessing.

### Background of the invention

Diffusion and/or filtration devices comprising hollow fiber membranes are used in various medical treatments which remove unwanted substances from body fluids, e.g. blood. Examples of such treatments are haemodialysis, haemodiafiltration and haemofiltration. The hollow fiber membranes usually comprise a hydrophobic polymer and a hydrophilic polymer. Polysulfones and polyethersulfones have been used as hydrophobic polymers in the preparation of such membranes and polyvinylpyrrolidone has been used as a hydrophilic polymer.

Document WO 02/28947 A1 describes a process of grafting monomer onto the surface of a highly photoactive membrane such as polyethersulfone. The polymeric membrane is dipped into a solution containing one or more monomers and a chain transfer agent, then removed from the solution and secured inside of a quartz vessel. The membrane is then irradiated with UV light at a wavelength in the range of 280 nm to 300 nm.

EP 0 509 663 A1 describes a method for the production of a membrane module comprising spinning a hollow fiber using a spinning solution containing a polysulfonic resin and a hydrophilic polymer, wetting the fiber above the saturated moisture content, and then subjecting the fiber to radiation-induced cross-linking using gamma- or X-rays.

US 2006/0076288 A1 discloses a method of manufacturing hydrophilic polyethersulfone (PES) membranes comprising the steps of providing a hydrophobic PES membrane, prewetting the hydrophobic PES membrane in a liquid having a sufficiently low surface tension, exposing the wet hydrophobic PES membrane to a sufficient amount of an aqueous solution of oxidizing agent, and thereafter, heating the hydrophobic PES for a sufficient time.

EP 0 550 798 A1 describes a method for cross-linking polyvinylpyrrolidone in a polysulfone membrane by gamma-rays.

US 5,885,456 A describes a porous membrane formed from a solution of a polysulfone and a free radical polymerizable monomer such as N-vinyl pyrrolidone exposed to UV radiation having a wavelength between about 290 nm and about 400 nm to form a blend of the polysulfone and copolymer of the polysulfone and polymerized monomer ('grafting from'). Prior to membrane formation, the unreacted polysulfone is separated from the copolymer. A solution of the copolymer composition is then subjected to phase separation to form a porous membrane. US 5,883,150 also describes formation of a copolymer blend of a polysulfone and a free radical polymerizable monomer in a solution irradiated with UV light.

JP 2003 171525 A discloses an electromagnetic wave-sensitive material showing a sufficiently large change in real part n and/or imaginary part k of a complex refractive index. Example 2 discloses mixing PVP, polysulfone, a dye, and a photoinitiator in a solvent, coating the resulting solution on a silicon wafer, baking it and subsequently exposing the coating to KrF laser light having a wavelength of 248 nm.

WO 99/55449 A1 discloses a membrane comprising a blend of a polysulfone or a polyethersulfone and polyethylene oxide/ polypropylene oxide substituted ethylene diamine.

EP 0 823 281 A1 discloses a membrane formed from a solution of a polysulfone and a free radical polymerizable monomer exposed to UV light to form a blend of the polysulfone and copolymers of polysulfone activation products and polymerized monomer having polymer segments covalently bonded to each other.

US 2003/0209487 A1 describes the modification of an ultrafiltration membrane by grafting monomer on the surface of the highly photoactive membrane, via the process of dipping the polymeric membrane into a solution containing one or more monomers and a chain transfer agent, removing the membrane from the solution and irradiating the membrane with UV light at wavelength in the range of 280 to 300 nm.

However, a graft polymerization process to form copolymers of at least one polysulfone or polyethersulfone and at least one polyvinylpyrrolidone starting from the respective polymers is desired.

### Summary of the Invention

It has now been found that graft copolymers of polysulfone or polyethersulfone and polyvinylpyrrolidone can be obtained by UV radiation-induced grafting polymerization of a polyvinylpyrrolidone onto a polysulfone or polyethersulfone in solution ('grafting to'). In one embodiment of the invention, the grafting polymerization is carried out in the presence of a photoinitiator. The graft copolymers can be used to prepare membranes, for instance flat sheet membranes or hollow fiber membranes, for medical treatments like haemodialysis, haemodiafiltration and haemofiltration.

### Detailed Description

The present invention provides a process for preparing a graft copolymer comprising the steps of
i) forming a polymer solution by dissolving at least one polysulfone or polyethersulfone and at least one polyvinylpyrrolidone in a solvent, and
ii) exposing the polymer solution to UV radiation having a wavelength λ in the range of from 300 to 400 nm.

In one embodiment of the invention, a polysulfone having a weight average molecular weight of from 40,000 to 100,000 g/mol, for instance, 70,000 to 85,000 g/mol, is used as a starting material. Examples of suitable polysulfones are available from Solvay S.A., under the trade name Udel® P-1700 NT LCD, Udel® P-1800, Udel® P-3500 NT LCD, and Udel® P-1835, or from BASF S.E., under the trade name Ultrason® S 6010.

In one embodiment of the invention, a polyethersulfone having a weight average molecular weight of from 30,000 to 80,000 g/mol, for instance, from 40,000 to 60,000 g/mol, is used as a starting material. Examples of suitable polyethersulfones are available from BASF S.E., under the trade name Ultrason® E 6020 P, or from Solvay S.A., under the trade name Gafone® 3000P, Gafone® 3100P and Gafone® 3200P.

In one embodiment of the invention, a polyvinylpyrrolidone having a number average molecular weight of from 10,000 to 500,000 g/mol and a weight average molecular weight of from 40,000 to 2,500,000 g/mol is used as a starting material. Examples include a polyvinylpyrrolidone having a number average molecular weight of from 10,000 to 20,000 g/mol and a weight average molecular weight of 40,000 to 60,000 g/mol, a polyvinylpyrrolidone having a number average molecular weight of from 150,000 to 500,000 g/mol and a weight average molecular weight of 700,000 to 2,500,000 g/mol, a polyvinylpyrrolidone having a number average molecular weight of from 200,000 to 400,000 g/mol and a weight average molecular weight of 900,000 to 2,000,000 g/mol, and a polyvinylpyrrolidone having a number average molecular weight of from 200,000 to 300,000 g/mol and a weight average molecular weight of 900,000 to 1,200,000 g/mol. In another embodiment, a mixture of a polyvinylpyrrolidone having a molecular weight of less than 100,000 g/mol and a polyvinylpyrrolidone of at least 100,000 g/mol is used as a starting material. Examples of suitable polyvinylpyrrolidones are available from BASF S.E., under the trade name Luvitec®. An example of a suitable polyvinylpyrrolidone having a molecular weight of less than 100,000 g/mol is available under the trade name Luvitec® K30. Examples of suitable polyvinylpyrrolidones having a molecular weight of at least 100,000 g/mol are available under the trade name Luvitec® K85 or Luvitec® K90, respectively.

In one embodiment of the invention, the at least one solvent is selected from the group consisting of N-methylpyrrolidone (NMP), N-ethylpyrrolidone, N-octylpyrrolidone or mixtures thereof. In one embodiment, the solvent is NMP.

In another embodiment of the invention, the solvent is dimethyl acetamide (DMAc).

In still another embodiment of the invention, the solvent is dimethyl formamide (DMF).

In still another embodiment of the invention, the solvent is dimethyl sulfoxide (DMSO).

In one embodiment of the invention, the concentration of the at least one solvent is from 60 to 98 wt%, relative to the total weight of the solution.

In one embodiment of the invention, the concentration of the at least one polysulfone or polyethersulfone is from 1 to 30 wt%, for instance from 1 to 5 wt%, or from 10 to 20 wt%, relative to the total weight of the solution.

In one embodiment of the invention, the concentration of the at least one polyvinylpyrrolidone is from 1 to 10 wt%, for instance from 1 to 3 wt%, or from 4 to 8 wt%, relative to the total weight of the solution.

In one embodiment of the invention, the polymer solution is exposed to UV radiation having a wavelength of from 300 to 400 nm in the absence of a photoinitiator. For polyethersulfone, radical formation is effected by chain scission, while for polysulfone different reaction paths are possible. UV radiation having a wavelength smaller than 300 nm generates chain degradation of polysulfone, whereas at longer wavelengths the H of the methyl group is selectively abstracted.

In one embodiment of the invention, a photoinitiator is added to the polymer solution before the polymer solution is exposed to UV radiation.

In one embodiment of the invention, an absorption spectrum of the photoinitiator in the solvent is taken before the reaction. From the spectrum, a suitable wavelength in the range of from 300 to 400 nm is selected for starting the graft polymerization of the at least one polysulfone or polyethersulfone and the at least one polyvinylpyrrolidone. A suitable wavelength is a wavelength at which the photoinitiator shows a high absorption. In one embodiment, the photoinitiator has an absorption maximum in the range of from 300 to 400 nm, and the wavelength of this absorption maximum is selected to start the graft polymerization.

In one embodiment of the invention, the photoinitiator is selected from the group consisting of benzophenone derivatives, benzoin derivatives, benzyl ketals, hydroxyalkylphenones, α-hydroxy ketones, α-amino ketones, acylphosphine oxides, thioxanthone derivatives, peroxides, diazothioethers and diazosulfonates. In one embodiment of the invention, the photoinitiator is selected from the group consisting of benzophenone derivatives, benzoin derivatives, benzyl ketals, α-hydroxy ketones, peroxides, diazothioethers and diazosulfonates. In one embodiment of the invention, the photoinitiator is selected from the group consisting of benzoin derivatives, benzyl ketals and α-hydroxy ketones.

In one embodiment of the invention, the photoinitiator is benzophenone. In another embodiment of the invention, the photoinitiator is a benzophenone carboxylic acid. In a further embodiment of the invention, the photoinitiator is hydrogen peroxide or dibenzoyl peroxide.

In another embodiment of the invention, the photoinitiator is 4,4-Diazostilbene-2,2-disulfonic acid disodium salt. In another embodiment of the invention, the photoinitiator is benzoin. In another embodiment of the invention, the photoinitiator is anisoin. In another embodiment of the invention, the photoinitiator is benzil. In a further embodiment of the invention, the photoinitiator is benzoin isobutyl ether.

In a further embodiment of the invention, the photoinitiator is an α-aminoketone such as 2-benzyl-2-(dimethylamino)-1-[4-(4-morpholinyl) phenyl]-1-butanone (available under the trade name "IRGACURE® 369" from BASF S.E.)

In another embodiment of the invention, the photoinitiator is 3,3',4,4-benzophenonetetracarboxylic dianhydride. One suitable UV radiation wavelength range for this initiator is 300 to 320 nm.

In another embodiment of the invention, the photoinitiator is 4-benzoylbiphenyl. One suitable UV radiation wavelength range for this initiator is 300 to 330 nm.

In another embodiment of the invention, the photoinitiator is 2-benzyl-2-(dimethylamino)-4'-morpholinobutyrophenone. One suitable UV radiation wavelength range for this initiator is 300 to 370 nm.

In a further embodiment of the invention, the photoinitiator is 4,4'-bis(diethylamino)benzophenone. One suitable UV radiation wavelength range for this initiator is 360 to 400 nm, for instance, 380 nm.

In another embodiment of the invention, the photoinitiator is 4,4'-dihydroxybenzophenone. One suitable UV radiation wavelength range for this initiator is 300 to 340 nm, for instance, 320 nm.

In another embodiment of the invention, the photoinitiator is 4-(dimethylamino)benzophenone. One suitable UV radiation wavelength range for this initiator is 320 to 400 nm, for instance, 360 nm.

In another embodiment of the invention, the photoinitiator is 2-methylbenzophenone. One suitable UV radiation wavelength range for this initiator is 300 to 320 nm.

In yet a further embodiment of the invention, the photoinitiator is 2,5-dimethylbenzophenone or 3,4-dimethylbenzophenone. One suitable UV radiation wavelength range for this initiator is 300 to 360 nm, for instance, 310 nm.

In a yet further embodiment of the invention, the photoinitiator is 4-hydroxybenzophenone. One suitable UV radiation wavelength range for this initiator is 300 to 360 nm.

In a further embodiment of the invention, the photoinitiator is dibenzosuberenone. One suitable UV radiation wavelength range for this initiator is 300 to 340 nm, for instance, 320 nm.

In a further embodiment of the invention, the photoinitiator is anthraquinone-2-sodium sulfonate. One suitable UV radiation wavelength range for this initiator is 300 to 340 nm, for instance 320 nm.

In a further embodiment of the invention, the photoinitiator is 4,4'-dimethylbenzil. One suitable UV radiation wavelength range for this initiator is 300 to 320 nm.

In a yet further embodiment of the invention, the photoinitiator is 2,2-diethoxyacetophenone. One suitable UV radiation wavelength range for this initiator is 300 to 320 nm.

In a further embodiment of the invention, the photoinitiator is 4'-ethoxyacetophenone. One suitable UV radiation wavelength range for this initiator is 300 to 320 nm.

In a further embodiment of the invention, the photoinitiator is 3'-hydroxyacetophenone. One suitable UV radiation wavelength range for this initiator is 300 to 330 nm.

In a further embodiment of the invention, the photoinitiator is 4'-phenoxyacetophenone. One suitable UV radiation wavelength range for this initiator is 300 to 320 nm.

In yet a further embodiment of the invention, the photoinitiator is ethylanthraquinone. One suitable UV radiation wavelength range for this initiator is 310 to 350 nm, for instance, 330 nm.

In another embodiment of the invention, the photoinitiator is phenanthrenequinone. One suitable UV radiation wavelength range for this initiator is 300 to 360 nm, for instance, 330 nm.

In another embodiment of the invention, the photoinitiator is 2-chlorothioxanthen-9-one. One suitable UV radiation wavelength range for this initiator is 350 to 400 nm, for instance, 380 nm.

In yet a further embodiment of the invention, the photoinitiator is thioxanthen-9-one. One suitable UV radiation wavelength range for this initiator is 360 to 400 nm.

In another embodiment of the invention, the photoinitiator is a bis acyl phosphine oxide (BAPO). An example is bis (2,4,6-trimethyl benzoyl) phenyl phosphine oxide (available under the trade name "IRGACURE® 819" from BASF S.E.). One suitable UV radiation wavelength range for this initiator is 360 to 400 nm, for instance, 370 nm.

In a further embodiment of the invention, the photoinitiator is a blend of a bis acyl phosphine oxide such as bis (2,4,6-trimethyl benzoyl) phenyl phosphine oxide and an α-hydroxyketone such as 2-hydroxy-2-methyl-1-phenyl-1-propanone. Such a blend is available under the trade name "IRGACURE® 2022" from BASF S.E. One suitable UV radiation wavelength range for this initiator is 360 to 400 nm, for instance, 370 nm.

In another embodiment of the invention, the photoinitiator is a mono acyl phosphine (MAPO). An example is (2,4,6-trimethylbenzoyl) diphenyl phosphine oxide (available under the trade name "LUCIRIN® TPO" from BASF S.E.). One suitable UV radiation wavelength range for this initiator is 360 to 400 nm, for instance, 380 nm, or 395 nm.

In another embodiment of the invention, the photoinitiator is a 1:1 blend of (2,4,6 trimethylbenzoyl) diphenyl phosphine oxide and 2-hydroxy-2-methylpropiophenone. One suitable UV radiation wavelength range for this initiator is 360 to 400 nm, for instance, 380 nm.

When initiators comprising acyl phosphine oxides are used in the process of the invention, light having longer wavelengths, e.g., 360 to 400 nm, can be used to initiate the grafting process. This offers advantages with respect to equipment requirements and energy consumption. Furthermore, the radicals generated do not absorb the wavelength of the irradiated light. Therefore, the radiation can penetrate deeper into the polymer solution, quantum yield is improved and side reactions due to photoreactions of the radicals are minimized.

In one embodiment of the invention, the concentration of the photoinitiator is from 0.01 to 5 wt%, for instance, from 0.1 to 0.4 wt%, relative to the total weight of the solution.

In one embodiment of the invention, the graft copolymerization is carried out at a temperature in the range of from 0 to 100°C, for instance, from 65 to 80°C, or from 20 to 40°C.

In one embodiment of the invention, the reaction is carried out in a quartz vessel or a flask with a quartz window, for instance a quartz top cover.

In another embodiment of the invention, the reaction is carried out in a falling film reactor.

In a further embodiment of the invention, the reaction is carried out in a photoreactor with an immersed UV lamp.

In yet a further embodiment of the invention, the reaction is carried out in a continuous-flow microreactor made of a suitable material, for instance quartz or Pyrex™.

In one embodiment of the invention, the polymer solution is irradiated for a time in the range of from 1 s to 7 h, for instance, from 10 s to 10 min, or from 2 h to 5 h.

The present invention also provides a process for the production of a porous membrane which comprises producing a graft copolymer formed by the inventive process, wherein the graft copolymer comprises
i) 90 to 99.8 wt%, for instance 90 to 99.5 wt%, or even 90 to 99 wt%, based on the total weight of the graft copolymer, of at least one polysulfone or polyethersulfone, and
ii) 0.2 to 10 wt%, for instance 0.5 to 10 wt%, or even 1.0 to 10 wt%, based on the total weight of the graft copolymer, of at least one polyvinylpyrrolidone grafted thereto.

In one embodiment of the process, the product obtained by the graft copolymerization is further processed to remove unreacted starting materials and by-products, for instance, unreacted polyvinylpyrrolidone. In one embodiment, the grafted copolymer is precipitated from the solution by addition of a precipitation medium. Examples of suitable precipitation media include water and alcohols like methanol or ethanol. In one embodiment, residual amounts of soluble polyvinylpyrrolidone are removed from the precipitate by extraction. Examples of suitable extraction media include methanol, ethanol, tetrahydrofurane, and supercritical carbon dioxide. In one embodiment, the precipitate is extracted with methanol. In one embodiment, the precipitate is subsequently dried to remove volatiles.

In one embodiment of the process, the purified precipitate is dissolved in a suitable solvent to produce a polymer solution for the production of porous flat sheet membranes or hollow fiber membranes. Examples of suitable solvents include dichloromethane, NMP and dimethyl acetamide (DMAC). In one embodiment, NMP is used to dissolve the precipitate.

In another embodiment of the process, the copolymer solution is directly used for the production of porous flat sheet membranes or hollow fiber membranes without any purification step.

A hollow fiber membrane can be prepared by a solvent phase inversion spinning process comprising extruding the copolymer solution through the outer ring slit of a hollow fiber spinning nozzle and simultaneously extruding a center fluid through the inner bore of the hollow fiber spinning nozzle, into a precipitation bath, washing the membrane obtained, drying said membrane and, optionally, sterilizing said membrane, e.g., by treatment with steam, ethylene oxide or radiation.

The center fluid used for preparing the membrane comprises at least one of the above-mentioned solvents and a precipitation medium chosen from the group of water, glycerol and other alcohols.

The center fluid generally comprises 40-100 wt% precipitation medium and 0-60 wt% of solvent. In one embodiment, the center fluid comprises 44-69 wt% precipitation medium and 29-54 wt% of solvent. In a particular embodiment, the center fluid comprises 49-61 wt% of water and 37-49 wt% of NMP. In another embodiment, the center fluid comprises 53-56 wt% of water and 44-47 wt% of NMP. The center fluid should also be degassed and filtered.

In one embodiment of the process for preparing the membrane, the temperature of the spinneret is 50-70°C, e.g., 55-61°C. The distance between the opening of the nozzle and the precipitation bath is from 30 to 110 cm, in particular 45 to 55 cm. The precipitation bath has a temperature of 10-80°C, e.g., 20-40°C. In one embodiment, the spinning velocity is in the range of 15-100 m/min, in particular 25-45 m/min.

In one embodiment of the process, the polymer solution coming out through the outer slit opening of the spinning die is, on the outside of the precipitating fiber, exposed to a humid steam/air mixture comprising a solvent in a content of between 0 and 10 wt%, related to the water content.

In one embodiment of the process, the temperature of the humid steam/air mixture is at least 15°C, preferably at least 30°C, and at most 75°C, but is preferably not higher than 62°C. Further, the relative humidity in the humid steam/air mixture is between 60 and 100%.

In another embodiment of the process, the humid steam/air mixture comprises a solvent in an amount of between 0 and 5 wt%, related to the water content. Preferably, the humid steam/air mixture comprises a solvent in an amount of between 0 and 3 wt%, related to the water content. The effect of the solvent in the temperature-controlled steam atmosphere is to control the speed of precipitation of the fibers. If less solvent is employed, a dense outer surface will result, and if more solvent is used, the outer surface will have a more open structure. By controlling the amount of solvent within the temperature-controlled steam atmosphere surrounding the precipitating membrane, the amount and size of the pores on the outer surface of the membrane can be modified and controlled.

In one embodiment of the process, the precipitation bath comprises from 85 to 100 wt% of water and from 0 to 15 wt% of solvent, e.g. NMP. In another embodiment, the precipitation bath comprises from 90 to 100 wt% water and from 0 to 10 wt% NMP.

In one embodiment of the process, the membranes are asymmetric, i.e. the mean diameter of the pores of one surface of the membrane is different from the mean pore diameter on the other membrane surface. For instance, the pores on the lumen surface of a hollow fiber membrane may be smaller or larger than the pores on the outside surface of the hollow fiber membrane. In one embodiment, the mean diameter of the pores on the surface having the smaller pores is in the range of from 1 nm to 500 nm, for instance, from 1 to 10 nm, or from 100 to 400 nm.

In one embodiment, there is a thin separation layer on the inner side of the fibers. The membrane may have, for example, a 3-layer structure or sponge-like or foam-like structure.

The membranes produced from the graft copolymer of the invention can be used in plasmapheresis, haemodialysis, haemodiafiltration or haemofiltration applications. The membranes may also be used in bioprocessing, plasma fractionation, in the preparation of protein solutions, and in water purification.

It will be understood that the features mentioned above and those described hereinafter can be used not only in the combination specified but also in other combinations or on their own, without departing from the scope of the present invention.

The present invention will now be described in more detail in the examples below. The examples are not intended to limit the scope of the present invention, but are merely an illustration of particular embodiments of the invention.

### Examples

Irradiations were carried out using a SOL2 UVACUBE reactor from Dr. Hönle AG (Grafelfing, Germany) with filter type H1 and a Hg lamp.

### Starting materials

- PSU: polysulfone Udel® P-1700 NT06, Solvay S.A.; Mₙ approx. 40 kDa;
- PVP: polyvinylpyrrolidone Luvitec K85, BASF S.E.; Mₙ = 250 kDa; M_{w} = 1,100 kDa;
- BP: Benzophenone, Acros.

The polymers were dried overnight at 80°C before use.

### Determination of PVP content of the graft copolymer

For the determination of the PVP content of the graft copolymers, the extrudate was dissolved in NMP to produce a 10% (w/w) solution and precipitated from the solution by the addition of methanol. The precipitate was transferred to a Soxhlet extractor, extracted with methanol for 65 hrs to remove any residual PVP not chemically bound in the graft copolymer, and subsequently dried.

Polysulfone/polyvinylpyrrolidone copolymers were dissolved in CDCl₃. ¹H-NMR spectra were recorded and PVP content was calculated from the integrals of the signal at 3.0-3.5 ppm (2H) for polyvinylpyrrolidone, 7.84 ppm (4H) for polysulfone and the molecular weights of the respective repeating units (polysulfone 442.53 g/mol; polyvinylpyrrolidone 111.14 g/mol).

Polyethersulfone/polyvinylpyrrolidone copolymers were dissolved in d₆-DMSO. ¹H-NMR spectra were recorded and PVP content was calculated from the integrals of the signal at 2.85-3.35 ppm (2H) for polyvinylpyrrolidone, 8.0 ppm (4H) for polyethersulfone and the molecular weights of the respective repeating units (polyethersulfone 232.26 g/mol; polyvinylpyrrolidone 111.14 g/mol).

### Example 1

The graft polymerization was carried out in a reaction flask with a volume of 40 mL having a cooling jacket and a quartz top cover. Before radiating the polymer solution, the solution was degassed. The reaction was carried out in a nitrogen atmosphere.

The reaction was carried out in a NMP solution of PSU and PVP, wherein the concentration of PSU was 14.5 wt% and the ratio PSU/PVP was 90:10. The amount of benzophenone (BP) as photoinitiator was 1.8 wt%. The reaction mixture was stirred at 20°C for 2 h under UV radiation at a wavelength of λ > 315 nm. The PVP content in the copolymer was determined after Soxhlett-extraction to be 0.6 wt%. The conditions of the experiment are summarized in table I below.

**Table I**

| **Conditions** | | **PVP in copolymer [wt%]** | **PSU in solution [wt%]** | **PSU:PVP [w/w]** | **BP in solution [wt%]** |
|---|---|---|---|---|---|
| T=20°C λ>315nm | 2h | 0.6 | 14.5 | 90:10 | 1.8 |

### Example 2

The reaction according to Example 1 was repeated, changing some parameters, as summarized in table II. 3 wt% BP and a ratio PSU:PVP of 75:25 were applied. Probes were taken after 2, 3.5, and 5 h, showing a maximum of PVP in the copolymer of 1.1 % after 3.5 h.

**Table II**

| **Conditions** | | **PVP in copolymer [wt%]** | **PSU in solution [wt%]** | **PSU:PVP [w/w]** | **BP in solution [wt%]** |
|---|---|---|---|---|---|
| T=20°C λ>315nm | 2h | 0.9 | 15 | 75:25 | 3 |
| | 3.5h | 1.1 | | | |
| | 5.0h | 0.7 | | | |

### Example 3

Due to a high viscosity of the solutions and a high UV absorption of PSU at high concentrations and a wavelength λ < 320 nm, a low penetration depth of UV radiation was achieved in Examples 1 and 2.

In order to increase the penetration depth of UV radiation, a polymer solution with a concentration of PSU ten times smaller than the solution of Examples 1 and 2 was applied. Accordingly, also the BP concentration was reduced. The results are summarized in table III below.

**Table III**

| **Conditions** | | **PVP in copolymer [wt%]** | **PSU in solution [wt%]** | **PSU:PVP [w/w]** | **BP in solution [wt%]** |
|---|---|---|---|---|---|
| T=20°C λ>315nm | 1h | 2.6 | 1.5 | 50:50 | 0.2 |
| | 2h | 3.2 | | | |
| | 3h | 3.2 | | | |

## Claims

1. A process for preparing a graft copolymer comprising the steps of
i) forming a polymer solution by dissolving at least one polysulfone or polyethersulfone and at least one polyvinylpyrrolidone in at least one solvent; and
ii) exposing the polymer solution to UV radiation, having a wavelength λ of from 300 to 400 nm.

2. The process of claim 1, wherein the polymer solution comprises
i) 1 to 30 wt%, relative to the total weight of the solution, of the at least one polysulfone or polyethersulfone,
ii) 1 to 10 wt%, relative to the total weight of the solution, of the at least one polyvinylpyrrolidone, and
iii) 60 to 98 wt%, relative to the total weight of the solution, of the at least one solvent.

3. The process of claim 1 or 2, wherein a photoinitiator is added to the polymer solution before exposing it to UV radiation.

4. The process of claim 3, wherein the amount of the at least one photoinitiator is 0.01 to 10 wt%, relative to the total weight of the polymer solution.

5. The process of claim 3 or 4, wherein the at least one photoinitiator is selected from the group consisting of benzophenone derivatives, benzoin derivatives, benzyl ketals, hydroxyalkylphenones, α-hydroxy ketones, α-amino ketones, acyl phosphine oxides, thioxanthone derivatives, peroxides, diazothioethers and diazosulfonates.

6. The process of claim 5, wherein the photoinitiator comprises an acyl phosphine oxide.

7. The process of any one of claims 1 to 6, wherein the solvent is N-methyl pyrrolidone.

8. The process of any one of claims 2 to 7, wherein the wavelength λ is in the range of from 360 to 400 nm.

9. A process for the production of a porous membrane which comprises producing a graft copolymer comprising
i) 90 to 99.8 wt%, based on the total weight of the graft copolymer, of at least one polysulfone or polyethersulfone, and
ii) 0.2 to 10 wt%, based on the total weight of the graft copolymer, of at least one polyvinylpyrrolidone grafted thereto
by a process according to any one of claims 1 to 8.

## Patentansprüche

1. Verfahren zur Herstellung eines Pfropfcopolymers, umfassend die Schritte
i) Erzeugen einer Polymerlösung durch Auflösen mindestens eines Polysulfons oder Polyethersulfons und mindestens eines Polyvinylpyrrolidons in mindestens einem Lösemittel; und
ii) Aussetzen der Polymerlösung einer UV-Strahlung einer Wellenlänge λ von 300 bis 400 nm.

2. Verfahren gemäß Anspruch 1, worin die Polymerlösung
i) 1 bis 30 Gew.-%, bezogen auf das Gesamtgewicht der Lösung, des mindestens einen Polysulfons oder Polyethersulfons,
ii) 1 bis 10 Gew.-%, bezogen auf das Gesamtgewicht der Lösung, des mindestens einen Polyvinylpyrrolidons, und
iii) 60 bis 98 Gew.-%, bezogen auf das Gesamtgewicht der Lösung, des mindestens einen Lösemittels
enthält.

3. Verfahren gemäß Anspruch 1 oder 2, worin der Polymerlösung ein Photoinitiator zugesetzt wird, bevor sie UV-Strahlung ausgesetzt wird.

4. Verfahren gemäß Anspruch 3, worin die Menge des mindestens einen Photoinitiators 0,01 bis 10 Gew.-% beträgt, bezogen auf das Gesamtgewicht der Polymerlösung.

5. Verfahren gemäß Anspruch 3 oder 4, worin der mindestens eine Photoinitiator ausgewählt ist aus der aus Benzophenon-Derivativen, Benzoin-Derivativen, Benzylketalen, Hydroxyalkylphenonen, α-Hydroxyketonen, α-Aminoketonen, Acylphosphinoxiden, Thioxanthon-Derivativen, Peroxiden, Diazothioethern und Diazosulfonaten bestehenden Gruppe.

6. Verfahren gemäß Anspruch 5, worin der Photoinitiator ein Acylphosphinoxid enthält.

7. Verfahren gemäß einem der Ansprüche 1 bis 6, worin das Lösemittel N-Methylpyrrolidon ist.

8. Verfahren gemäß einem der Ansprüche 2 bis 7, worin die Wellenlänge λ im Bereich von 360 bis 400 nm liegt.

9. Verfahren zur Herstellung einer porösen Membran umfassend die Herstellung eines
i) 90 bis 99,8 Gew.-%, bezogen auf das Gesamtgewicht des Pfropfcopolymers, mindestens eines Polysulfons oder Polyethersulfons, und
ii) 0,2 bis 10 Gew.-%, bezogen auf das Gesamtgewicht des Pfropfcopolymers, mindestens eines darauf gepfropften Polyvinylpyrrolidons
enthaltenden Pfropfcopolymers durch ein Verfahren gemäß einem der Ansprüche 1 bis 8.

## Revendications

1. Procédé de préparation d'un copolymère greffé comprenant les étapes de
i) formation d'une solution de polymère par dissolution d'au moins un polysulfone ou polyéthersulfone et au moins une polyvinylpyrrolidone dans au moins un solvant ; et
ii) exposition de la solution de polymère à un rayonnement UV, ayant une longueur d'onde λ de 300 à 400 nm.

2. Procédé de la revendication 1, dans lequel la solution de polymère comprend
i) 1 à 30 % en poids, par rapport au poids total de la solution, de l'au moins un polysulfone ou polyéthersulfone,
ii) 1 à 10 % en poids, par rapport au poids total de la solution, de l'au moins une polyvinylpyrrolidone, et
iii) 60 à 98 % en poids, par rapport au poids total de la solution, de l'au moins un solvant.

3. Procédé de la revendication 1 ou 2, dans lequel un photo-initiateur est ajouté à la solution de polymère avant de l'exposer à un rayonnement UV.

4. Procédé de la revendication 3, dans lequel la quantité de l'au moins un photo-initiateur est de 0,01 à 10 % en poids, par rapport au poids total de la solution de polymère.

5. Procédé de la revendication 3 ou 4, dans lequel l'au moins un photo-initiateur est choisi dans le groupe constitué de dérivés de benzophénone, dérivés de benzoïne, benzylcétals, hydroxyalkylphénones, α-hydroxycétones, α-aminocétones, oxydes d'acylphosphine, dérivés de thioxanthone, peroxydes, diazothioéthers et diazosulfonates.

6. Procédé de la revendication 5, dans lequel le photo-initiateur comprend un oxyde d'acylphosphine.

7. Procédé de l'une quelconque des revendications 1 à 6, dans lequel le solvant est la N-méthylpyrrolidone.

8. Procédé de l'une quelconque des revendications 2 à 7, dans lequel la longueur d'onde λ est dans la plage de 360 à 400 nm.

9. Procédé de production d'une membrane poreuse qui comprend la production d'un copolymère greffé comprenant
i) 90 à 99,8 % en poids, sur la base du poids total du copolymère greffé, d'au moins un polysulfone ou polyéthersulfone, et
ii) 0,2 à 10 % en poids, sur la base du poids total du copolymère greffé, d'au moins une polyvinylpyrrolidone greffée à celui-ci
par un procédé selon l'une quelconque des revendications 1 à 8.
